# EUROPEAN PATENT APPLICATION

(11) **EP 3 457 364 A1**
(43) Date of publication of application: **20.03.2019**
(21) Application number: 18192440.8
(22) Date of filing: 04.09.2018
(51) Int. Cl.: G07C 9/00

(54) **Electronic custom lock device and method for conducting an inspection of cargo boxes**

(30) Priority: 18.09.2017 CN 201710841212
(71) Applicant: Nuctech Company Limited, Beijing 100084 (CN); Tsinghua University, Beijing 100084 (CN)
(72) Inventor: KANG, Kejun, Beijing, 100084 (CN); CHEN, Zhiqiang, Beijing, 100084 (CN); MIAO, Qitian, Beijing, 100084 (CN); LI, Yuanjing, Beijing, 100084 (CN); WU, Xianghao, Beijing, 100084 (CN); LIU, Shiguo, Beijing, 100084 (CN)
(74) Representative: Isarpatent

(57) **Abstract**

The present disclosure provides an electronic custom lock device (300) and a method (400) for conducting an inspection of cargo boxes. The electronic custom lock device (300) comprises: a first communication unit (310), configured to communicate with a terminal device through first communication; a memory (320), configured to store an initial inspection image; and a processor (330), configured to control the first communication unit (310) to transmit the initial inspection image to an inspecting terminal device when the electronic custom lock device (300) is connected to the inspecting terminal device through the first communication unit (310). The first communication is one of Bluetooth communication, near field communication, and radio frequency identification communication.

## Description

### CROSS-REFERENCE TO RELATED APPLICATION(S)

This application claims priority to the Chinese Patent Application No. 201710841212.6, filed on September 18, 2017, which is incorporated herein by reference in its entirety.

### TECHNICAL FIELD

The present disclosure relates to the field of logistics supervision, and more particularly to an electronic custom lock device and a method for conducting an inspection of cargo boxes

### BACKGROUND

In the field of logistics transportation or customs clearance inspection, it is necessary to prevent the cargo boxes (for example, containers), that are transported or to be inspected, from being illegally opened without permission, thereby ensuring the safety of the transportation of cargo boxes and guaranteeing the supervision effectiveness of the customs clearance inspection, without leaving law breakers any chance. Typically, a custom lock (e.g., a mechanical lock and an electronic lock) is used to achieve the lock-in monitoring and controlling of the door of cargo boxes. However, the safety of mechanical locks and the cost and performance of existing electronic locks may be difficult to meet requirements for practical use (especially for long-distance, long-term cross-border logistics transportation). Therefore, there is a need for an electronic custom lock device that is more convenient, safer, and less costly.

### SUMMARY

In order to solve the above problems existing in the prior art, the present disclosure proposes an electronic custom lock device and a method for conducting an inspection of cargo boxes.

In accordance with one aspect of the present disclosure, there is provided an electronic custom lock device. The electronic custom lock device comprises: a first communication unit, configured to communicate with a terminal device through first communication; a memory, configured to store an initial inspection image; a processor, configured to control the first communication unit to transmit the initial inspection image to an inspecting terminal device when the electronic custom lock device is connected to the inspecting terminal device through the first communication unit. The first communication is one of Bluetooth communication, near field communication, and radio frequency identification communication.

In one embodiment, the electronic custom lock device further comprises: an event detecting unit, configured to detect a security event of the electronic custom lock device, and generate an event notification when the security event is detected. Wherein the processor is further configured to receive the event notification, and record event information in the memory based on the event notification. In addition, the processor is further configured to control the first communication unit to transmit the event information record to the inspecting terminal device when the electronic custom lock device is connected to the inspecting terminal device through the first communication unit.

In one embodiment, the electronic custom lock device further comprises: a second communication unit, configured to communicate with a server through mobile communication. Wherein the processor is further configured to control the second communication unit to transmit location information of the electronic custom lock device to the server.

In one embodiment, the processor is further configured to control the second communication unit to transmit an alarm message to the server upon receiving the event notification.

In one embodiment, the initial inspection image is obtained from a sealing terminal device through the first communication unit and/or an OTG connection.

In one embodiment, the electronic custom lock device further comprises a sealing/unsealing structure. The sealing/unsealing structure comprises a combination of a linear motor and a slider.

In one embodiment, the electronic custom lock device further comprises a positioning unit. The positioning unit obtains position information and orientation information about base station from the second communication unit, and determines position of the electronic custom lock device based on the position information and the orientation information.

In one embodiment, the electronic custom lock device further comprises a battery unit and a battery detachment monitoring unit. The battery unit is configured to be detachable. The battery detachment monitoring unit is configured to monitor detachment of the battery unit. The battery detachment monitoring unit is a photodetector or a position detector.

In accordance with another aspect of the present disclosure, there is also provided a method for inspecting a cargo box sealed by an electronic custom lock device according to the above embodiments. The method comprises: obtaining an initial inspection image from the electronic custom lock device; acquiring an instant inspection image of the cargo box; comparing the initial inspection image with the instant inspection image. When the initial inspection image is consistent with the instant inspection image, it is determined that the cargo box passes the inspection.

In one embodiment, the method further comprises: obtaining an event information record from the electronic custom lock device. When the event information record is empty, it is determined that the cargo box passes the inspection. When the event information record is not empty, the step of obtaining the initial inspection image and/or logistics information is triggered.

In one embodiment, the method further comprises: obtaining an alarm record about the electronic custom lock device from a server. Wherein when the alarm record is empty, it is determined that the cargo box passes the inspection, and when the alarm record is not empty, the step of obtaining the initial inspection image and/or logistics information is triggered.

In one embodiment, the obtaining the alarm record about the electronic custom lock device from the server comprises: obtaining identification information of the electronic custom lock device; querying the server for the alarm record utilizing the identification information; and receiving a query result from the server.

In one embodiment, an unpacking inspection prompt is triggered when the initial inspection image is inconsistent with the instant inspection image.

The electronic custom lock device and the method for inspecting cargo boxes using the electronic custom lock device proposed by the present disclosure may enable more reliable monitoring of the state of the cargo boxes during logistics transportation, and may enable a faster and more efficient customs clearance inspection while ensuring the accuracy.

### BRIEF DESCRIPTION OF THE ACCOMPANYING DRAWINGS

FIG. 1 illustrates a logistics scenario for a cargo box that is sealed using an electronic custom lock device.
FIG. 2 illustrates a schematic view of an appearance of an electronic custom lock device according to an embodiment of the present disclosure.
FIG. 3 illustrates a structural block diagram of an electronic custom lock device according to an embodiment of the present disclosure.
FIG. 4 illustrates a flow chart of a method of inspecting a cargo box which is sealed by an electronic custom lock device according to an embodiment of the present disclosure.

### DETAILED DESCRIPTION

The specific embodiments of the present disclosure are described in detail below. It is to be understood that the embodiments described herein are for illustrative purposes only and are not intended to limit the disclosure. In the following description, numerous specific details are set forth in order to provide a thorough understanding of the present disclosure. However, it will be apparent to those skilled in the art that the present disclosure may be practiced without employing these specific details. In other instances, well-known circuits, materials, or methods have not been described in detail in order to avoid obscuring the present disclosure.

Throughout the specification, reference to "one embodiment", "an embodiment", "one example" or "an example" means that a particular feature, structure, or characteristic described in connection with the embodiment or example is included in at least one embodiment of the present disclosure. Therefore, the phrase "in one embodiment", "in an embodiment", "in one example" or "in an example" appearing in various places throughout the specification is not necessarily referring to the same embodiment or example. Furthermore, a particular feature, structure, or characteristic may be combined in one or more embodiments or examples in any suitable combination and/or subcombination. In addition, the drawings provided herein are merely for the purpose of illustration, and the drawings are not necessarily drawn to scale. The term "and/or" used herein includes any and all combinations of one or more of the associated listed items.

The present disclosure is specifically described below with reference to the accompanying drawings.

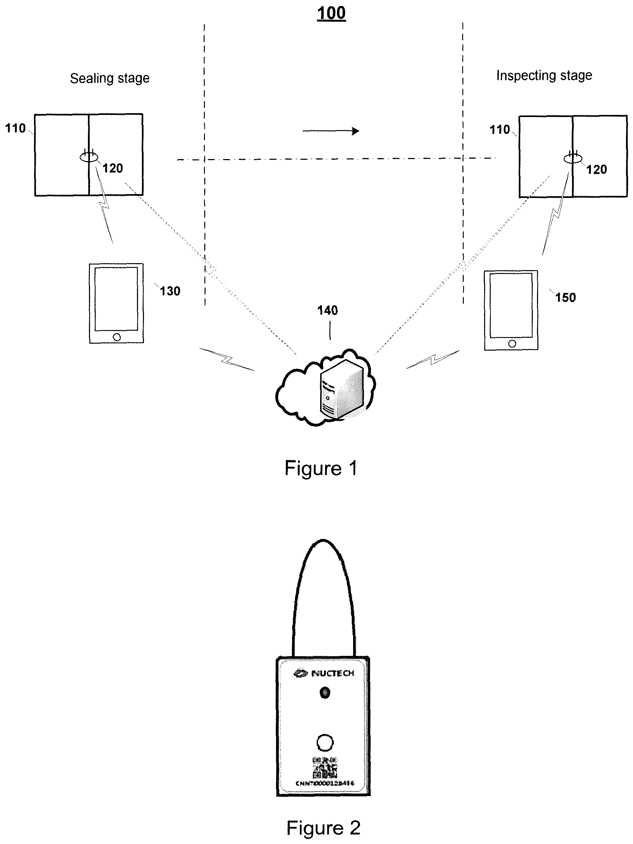

At first, FIG. 1 illustrates a logistics scenario 100 for a cargo box that is sealed using an electronic custom lock device.

As shown in FIG. 1, the scenario 100 is divided into two stages, a sealing stage and an inspection stage.

During the sealing stage, the sealing is performed by an electronic custom lock device 120 on the door of a cargo box 110. The electronic custom lock device 120 communicates with a terminal device 130, and the terminal device 130 communicates with a server 140. Alternatively, the electronic custom lock device 120 can communicate directly with the server 140.

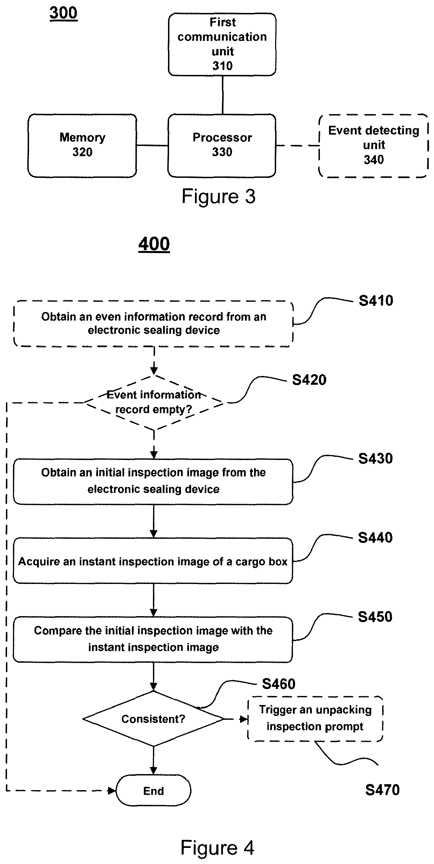

The electronic custom lock device 120 may be an electronic custom lock device 300 according to an embodiment of the present disclosure, which will be described in detail below in connection with FIG. 3. FIG. 2 illustrates a schematic view of an exemplary appearance of an electronic custom lock device 120. In appearance, the electronic custom lock device 120 includes two parts, a lock lever and a lock body. When use the electronic custom lock device 120, it is attached to a cargo box and locked on the cargo box by making the lock lever pass through a retaining ring or a lockhole on the door of the cargo box. The lock lever can be made of a flexible material, and have a diameter on the order of millimeters, such as about 5 mm, for greater flexibility. An unique identifier, barcode or two-dimensional code of the electronic custom lock device 120 is printed on the lock body, so that an terminal device 130, 150 can obtain the identification information of the electronic custom lock device 120 by scanning or inputting the unique identifier, barcode or two-dimensional code. It should be understood that the appearance of the electronic custom lock device 120 of FIG. 2 is merely exemplary, and in other embodiments of the present disclosure, the electronic custom lock device 120 may also have any other possible appearance structure.

In the principle of sealing and unsealing, a conventional sealing/unsealing structure uses a rotary motor as well as a reduction gear and a rack which are fitted with one another, which, however, will cause a problem that the torque becomes small at a low temperature. Based on this, the electronic custom lock device 120 in the present application is implemented by a linear motor plus a slider (similar to the manner of a lifting jack). This approach enables a higher energy conversion efficiency, that is, a motor having the same power can output more force. Thereby, the stability of the sealing and the unsealing can be ensured even at a low temperature.

The terminal device 130 may also be referred to as a sealing terminal device 130, which may be any type of mobile or wired terminal, such as a smart phone, a tablet, a laptop, or the like. The terminal device 130 communicates with the electronic custom lock device 120 through a specific communication mode. In one embodiment, the communication mode is preferably a low power consumption, low cost or short range communication mode, such as Bluetooth, near field communication, radio frequency identification, and the like. The terminal device 130 is also capable of scanning a barcode, a two-dimensional code or an identifier on the electronic custom lock device 120 to obtain identification information of the electronic custom lock device 120. In one embodiment, the terminal device 130 also has an on-the-go (OTG) function so that data (such as, image data be written or read) can be directly transmitted between the terminal device 130 and the electronic custom lock device 120 through an OTG interface.

The server 140 may be a cloud server or any other type of server system capable of carrying data. The server 140 communicates with the terminal device 130 by means of mobile communication, such as, for example, 2G, 3G, 4G or 5G cellular communication, WiFi communication, and the like. In the case where a mobile communication unit is arrange in the electronic custom lock device 120, the server 140 can also directly communicate with the electronic custom lock device 120 through the various mobile communication modes described above.

During the sealing stage, as an example, the sealing can be performed by the following flow. It should be understood that the following flow is only for ease of understanding, and does not impose any limitation on the embodiments of the present disclosure.

First, the electronic custom lock device 120 is activated or initialized.

Then, an initial inspection image of the cargo box 110 is obtained by the terminal device 130 and the initial inspection image is written to the electronic custom lock device 120 together with logistics information and the like. The logistics information may be obtained from a customs declaration or an official logistics system.

Key information (for example, a password) generated for the current sealing of the electronic custom lock device 120 is obtained from the server 140, and the key information is written into the electronic custom lock device 120.

Finally, the door of the cargo box 110 is locked using the electronic custom lock device 120 for performing sealing.

After the sealing is completed, the electronic custom lock device 120 enters a supervisory state, and as the cargo box 110 travels, the electronic custom lock device 120 can report its location information to the server 140. In one embodiment, the electronic custom lock device 120 periodically reports its location information to the server 140.

The electronic custom lock device 120 may be in a sleep state when no location information is reported.

When the cargo box 110 travels to an intermediate checkpoint or destination, the logistics flow enters the inspection stage. During the inspection stage, the cargo box 110 is inspected by interactions of the terminal device 150 with the electronic custom lock device 120 (i.e., determining whether the cargo box 110 has been opened or damaged). The electronic custom lock device 120 communicates with the terminal device 150, and the terminal device 150 communicates with the server 140. Alternatively, the electronic custom lock device 120 can communicate directly with the server 140.

The terminal device 150 may also be referred to as an inspecting terminal device 150, which may be any type of mobile or wired terminal, such as a smart phone, a tablet, a laptop, or the like. The terminal device 150 communicates with the electronic custom lock device 120 through a specific communication mode. In one embodiment, the communication mode is preferably a low power consumption, low cost or short range communication mode, such as Bluetooth, near field communication, radio frequency identification, and the like. The terminal device 150 is also capable of scanning a barcode, a two-dimensional code or an identifier on the electronic custom lock device 120 to obtain identification information of the electronic custom lock device 120. In one embodiment, the terminal device 150 also has an on-the-go (OTG) function so that data (such as, image data be written or read) can be directly transmitted between the terminal device 150 and the electronic custom lock device 120 through an OTG interface.

A method of inspecting the cargo box 110 during the inspection stage will be described in detail below with reference to FIG. 4.

FIG. 3 illustrates a structural block diagram of an electronic custom lock device 300 according to an embodiment of the present disclosure. As described above, the electronic custom lock device 300 can act as the electronic custom lock device 120 in the scenario shown in FIG. 1.

As can be seen from FIG. 3, the electronic custom lock device 300 includes a first communication unit 310, a memory 320, a processor 330, and an event detecting unit 340. In FIG. 3, the event detecting unit 340 is shown by dashed lines, indicating that the event detecting unit 340 is not a necessary component, and in some embodiments of the present disclosure, the event detecting unit 340 may be omitted.

The first communication unit 310 is configured to communicate with a terminal device (such as the terminal device 130, 150 in FIG. 1) through first communication. The first communication is preferably a low power consumption, low cost or short range communication mode, such as Bluetooth, near field communication, radio frequency identification, and the like.

In one embodiment, the first communication unit 310 is in a sleep state when it is not in operation. The first communication unit 310 can be activated from the sleep state by performing a touch activation (such as touching a button on the electronic custom lock device 300) or a signaling activation (by transmitting an activation instruction, which can be a request for transmitting or receiving, to the electronic custom lock device 300) to the electronic custom lock device 300. In addition, in the case where the first communication unit 310 has not operated for a first threshold time (such as 10 minutes), it returns to the sleep state.

The memory 320 can be any type of data storage unit that is configured to store an initial inspection image. The initial inspection image may be obtained from a sealing terminal device (e.g., the terminal device 130) via the first communication unit and/or OTG connection.

In one embodiment, the memory 320 is also configured to store logistics information, event information records (as described below), and the like.

The processor 330 can be any type of processing unit. The processor 330 is configured to control the first communication unit 310 to transmit the initial inspection image to an inspecting terminal device (e.g., the terminal device 150) when the electronic custom lock device 300 is connected to the inspecting terminal device 150 through the first communication unit 310. In one embodiment, the processor 330 is further configured to control the first communication unit 310 to receive the initial inspection image from a sealing terminal device (e.g., the terminal device 130) when the electronic custom lock device 300 is connected to the sealing terminal device 130 through the first communication unit 310.

The event detecting unit 340 is configured to detect a security event of the electronic custom lock device 300 and generate an event notification when a security event is detected. The security event includes, for example, the electronic custom lock device 300 being unlocked, the electronic custom lock device 300 being broken, and the like. The event detecting unit 340 can be implemented as a detecting circuit. Since an open circuit due to the unlocking or breaking of an electronic custom lock will lead to a significant abrupt change in parameters of the detecting circuit, the event detecting unit may determine whether a security event has occurred on basis on the change in parameters. In one embodiment, a separate switch unit may be provided for the event detecting unit 340. When the switch unit is turned on, the event detecting unit 340 is powered on and thus can be in an operating state to detect a security event during the logistics process. When the switch unit is turned off, the event detecting unit 340 is powered off and thus is not in the operating state. The switch unit can be controlled by encryption, fingerprint or other means of encryption. When an inspecting party or an receiving party has the encryption control for the switch unit, the operating state of the switch unit can be released, thereby preventing a normal unsealing process from triggering an alarm.

In one embodiment, the processor 330 is further configured to receive an event notification and record event information in the memory 320 based on the event notification. The event notification may include an event type, such as unlocking of the custom lock or breaking of the custom lock. The event information may include the event type indicated in the event notification, and may also include an event time, an event location, and the like.

In one embodiment, the processor 330 is further configured to control the first communication unit 310 to transmit an event information record to an inspecting terminal device (e.g., the terminal device 150) when the electronic custom lock device 300 is connected to the inspecting terminal device through the first communication unit 310.

In one embodiment, the electronic custom lock device 300 further includes a second communication unit. The second communication unit communicates with a server through mobile communication, such as 2G, 3G, 4G or 5G cellular communication, WiFi communication, and the like. The processor 330 is further configured to control the second communication unit to transmit location information of the electronic custom lock device 300 to a server (e.g., the server 140).

In one embodiment, the processor 330 is further configured to control the second communication unit to transmit alarm information to a server upon receiving the event notification.

It should be understood that other common units or modules, such as a positioning unit, a battery unit, and a power management module, etc., may also be included in the electronic custom lock device 300.

In one embodiment, the positioning unit may be implemented as a satellite positioning unit which locates the electronic custom lock device 300 via a satellite positioning system, for example, a GPS system or a Beidou system.

In another embodiment, the positioning unit further includes a base station positioning module, which obtains position information and orientation information about the base station from the second communication unit, and locates the electronic custom lock device 300 based on the information. The positioning can be achieved by, for example, a triangulation method. Compared with satellite positioning, base station positioning will reduce power consumption to some extent.

In one embodiment, the battery unit is detachable, so as to accommodate the need to charge or replace a battery during long distance transportation involved by, for example, the "One Belt and One Road" initiative. In order to ensure the safety of the device, a battery detachment monitoring unit can also be provided for monitoring the occurrence of battery detachment. The battery detachment monitoring unit can be implemented by a photodetector or a position detector. When the system has not received an instruction to permit detachment, if the battery is detached from its installation position, the battery detachment monitoring unit triggers the alarm unit to issue an alert.

The electronic custom lock device 300 can extend the service time of the electronic custom lock device, which may be up to 20 days, by communicating with the terminal device by using the first communication unit 310 with low power consumption. As such, the electronic custom lock device 300 according to an embodiment of the present disclosure can be better adapted to cross-border long-distance logistics between various countries involved by, for example, the " One Belt and One Road " initiative.

FIG. 4 illustrates a flow chart of a method 400 of inspecting a cargo box which is sealed by an electronic custom lock device (such as the electronic custom lock device 300) according to an embodiment of the present disclosure. The method 400 can be performed by an inspecting terminal device, for example, the terminal device 150, or by any other suitable wired or wireless device.

As can be seen in FIG. 4, the method 400 begins with step S410, where an event information record is obtained from an electronic custom lock device. Then, in determining step S420, it is determined whether the event information record is empty. When the event information record is empty, the method 400 proceeds to the end node and the cargo box passes the inspection. When the event information record is not empty, the method 400 proceeds to step S430, where an initial inspection image is obtained from the electronic custom lock device. Next, in step S440, an instant inspection image of the cargo box is acquired. Then, in step S450, the initial inspection image and the instant inspection image are compared. Then, in determining step S460, it is determined whether the result of the comparison is that the initial inspection image is consistent with the instant inspection image. When the initial inspection image is consistent with the instant inspection image, the method 400 proceeds to the end node and the cargo box passes the inspection. When the initial inspection image is inconsistent with the instant inspection image, the method 400 proceeds to step S470, where an unpacking inspection prompt is triggered. Inspectors perform an unpacking inspection.

In FIG. 4, a plurality of steps (such as steps S410 and S420, etc.) are shown by dashed lines, indicating that these steps are not necessary, and in some embodiments of the present disclosure, these steps may be omitted.

In step S410, the event information record is obtained from the electronic custom lock device. As described above, the event information is information about the security event that has occurred to the electronic custom lock device since it was sealed, and the event information may include a content type, event time, event location, and the like. The event information reflects whether the electronic custom lock device has been damaged or unlocked during the period of time from the sealing to the inspection. If it is determined that the safety has been guaranteed, it can be considered that the cargo box passes the inspection and the cargo box is released by customs. That is, in step S420, if it is determined that the event information is empty, the method 400 ends the end node (it is considered that the cargo box passes the inspection).

In another embodiment, instead of obtaining an event information record from the electronic custom lock device in step S410, the method 400 may also obtain an alarm record about the electronic custom lock device from a server. Similarly, when the alarm record is empty, it is determined that the cargo box passes the inspection. When the alarm record is not empty, however, the method 400 proceeds to the next step.

In one embodiment, the obtaining an alarm record about the electronic custom lock device from a server includes, obtaining identification information of the electronic custom lock device; querying the server for the alarm record utilizing the identification information, and receiving a query result.

In step S420, if it is determined that the event information record is not empty (i.e., the electronic custom lock device may be damaged during the period of time from the sealing to the inspection), the method 400 proceeds to step S430, where an initial inspection image is obtained from the electronic custom lock device, and then to step S440, where an instant inspection image of the cargo box is acquired. Although the step S430 is shown as being located before the step S440 in FIG. 4, it should be understood that this is merely an example, and in other embodiments, the step S440 may be located before the step S430, or both steps may be performed in parallel.

In step S450, the initial inspection image and the instant inspection image are compared. The comparison may be achieved by graphics comparison in units of pixels or other image units (by executing a particular graphics comparison program by a processer), and may also be achieved by manual mapping.

In determining step S460, it is determined whether the initial inspection image is consistent with the instant inspection image. If the initial inspection image is consistent with the instant inspection image, the method 400 proceeds to the end node and the cargo box passes the inspection. If the initial inspection image is inconsistent with the instant inspection image, step S470 is performed to prompt inspectors to perform an unpacking inspection.

Through the various steps in the method 400, the efficiency of the inspection can be greatly improved while the accuracy of the inspection is ensured, and thus better adapting the development of cross-border logistics between various countries involved by, for example, the "One Belt and One Road" initiative.

In the above description, not all the details of the actual inspection process are described. As an example, if the terminal device intends to read and write images or event records in the electronic custom lock device, it may need to performing the steps of logging in to the logistics platform on the server for identity confirmation, obtaining the key preset in the electronic custom lock device from the server, and then operating the electronic custom lock device by means of the key. However, it should be understood that the embodiments of the present disclosure may include such content, but partial details are omitted in the above description in order to emphasize the focus of the embodiments of the present disclosure.

The detailed description above has set forth numerous embodiments by utilizing schematic diagrams, flowcharts, and/or examples. In the case where such schematic diagrams, flowcharts, and/or examples include one or more functions and/or operations, those skilled in the art will appreciate that each function and/or operation in such schematic diagrams, flowcharts, or examples may be implemented separately and/or collectively by various structures, hardware, software, firmware or substantially any combination thereof. In one embodiment, several portions of the subject matter of embodiments of the present disclosure may be implemented by an application specific integrated circuit (ASIC), a field programmable gate array (FPGA), a digital signal processor (DSP), or any other integrated manner. However, those skilled in the art will appreciate that some aspects of the embodiments disclosed herein may be implemented in an integrated circuit as a whole or in part, as one or more computer programs running on one or more computers (e.g., as one or more programs running on one or more computer systems), as one or more programs running on one or more processors (e.g., as one or more programs running on one or more microprocessors), as firmware, or substantially as any combination thereof. Those skilled in the art will possess the capability of designing circuit and/or writing software and/or firmware code, in accordance with the present disclosure. Moreover, those skilled in the art will recognize that the mechanism of the subject matter described herein can be distributed as a variety of forms of program products. And regardless of the particular type of signal-carrying medium utilized to perform the distribution in practice, all the exemplary embodiments in accordance with the subject matter of the present disclosure apply. Examples of signal-carrying medium include, but is not limited to, recordable medium such as a floppy disk, a hard drive, a compact disk (CD), a digital versatile disk (DVD), a digital tape, a computer memory, and the like, and transmission medium such as digital and/or analog communication medium (e.g., a fiber optic cable, a waveguide, a wired communication link, a wireless communication link, etc.).

Although the present disclosure has been described with reference to several exemplary embodiments, it is to be understood that the terms as used herein are illustrative and exemplary but not restrictive. Since the present disclosure may be embodied in a variety of forms without departing from the spirit or scope of the disclosure, it is to be understood that the above-described embodiments are not limited to any above-described details, but should be interpreted broadly within the spirit and scope defined by the appended claims. Therefore, all and modifications and variations that come within the scope of the claims or the equivalents thereof are intended to be covered by the appended claims.

## Claims

1. An electronic custom lock device, comprising:
a first communication unit configured to communicate with a terminal device through first communication;
a memory configured to store an initial inspection image;
a processor configured to control the first communication unit to transmit the initial inspection image to an inspecting terminal device when the electronic custom lock device is connected to the inspecting terminal device through the first communication unit,
wherein the first communication is one of Bluetooth communication, near field communication, and radio frequency identification communication.

2. The electronic custom lock device of claim 1, further comprising:
an event detecting unit configured to detect a security event of the electronic custom lock device, and generate an event notification when the security event is detected,
wherein the processor is further configured to receive the event notification, and record event information in the memory based on the event notification, and
the processor is further configured to control the first communication unit to transmit the event information record to the inspecting terminal device when the electronic custom lock device is connected to the inspecting terminal device through the first communication unit.

3. The electronic custom lock device of claim 2, further comprising:
a second communication unit configured to communicate with a server through mobile communication,
wherein the processor is further configured to control the second communication unit to transmit location information of the electronic custom lock device to the server.

4. The electronic custom lock device of claim 3, wherein the processor is further configured to control the second communication unit to transmit an alarm message to the server upon receiving the event notification.

5. The electronic custom lock device of claim 3, wherein the initial inspection image is obtained from a sealing terminal device through the first communication unit and/or an OTG connection.

6. The electronic custom lock device of claim 1, further comprising: a sealing/unsealing structure comprising a combination of a linear motor and a slider.

7. The electronic custom lock device of claim 3, further comprising: a positioning unit which obtains position information and orientation information about base station from the second communication unit, and determines position of the electronic custom lock device based on the position information and the orientation information.

8. The electronic custom lock device of claim 1, further comprising:
a battery unit configured to be detachable;
a battery detachment monitoring unit configured to monitor detachment of the battery unit,
the battery detachment monitoring unit is a photodetector or a position detector.

9. A method for inspecting a cargo box sealed by an electronic custom lock device according to any one of claims 1-8, comprising:
obtaining an initial inspection image from the electronic custom lock device;
acquiring an instant inspection image of the cargo box;
comparing the initial inspection image with the instant inspection image,
wherein when the initial inspection image is consistent with the instant inspection image, it is determined that the cargo box passes the inspection.

10. The method of claim 9, further comprising:
obtaining an event information record from the electronic custom lock device,
wherein when the event information record is empty, it is determined that the cargo box passes the inspection,
when the event information record is not empty, the step of obtaining the initial inspection image and/or logistics information is triggered.

11. The method of claim 9, further comprising:
obtaining an alarm record about the electronic custom lock device from a server,
wherein when the alarm record is empty, it is determined that the cargo box passes the inspection,
when the alarm record is not empty, the step of obtaining the initial inspection image and/or logistics information is triggered.

12. The method of claim 11, wherein the obtaining the alarm record about the electronic custom lock device from the server comprises:
obtaining identification information of the electronic custom lock device;
querying the server for the alarm record utilizing the identification information,
receiving a query result from the server.

13. The method of claim 9, wherein an unpacking inspection prompt is triggered when the initial inspection image is inconsistent with the instant inspection image.
